(19) Europäisches Patentamt
European Patent Office
Office européen des brevets

(11) EP 3 492 520 B1

(12) **EUROPEAN PATENT SPECIFICATION**

(45) Date of publication and mention of the grant of the patent:
**13.05.2020 Bulletin 2020/20**

(21) Application number: **18205869.3**

(22) Date of filing: **13.11.2018**

(51) Int Cl.:
***C08K 5/00*** *(2006.01)*
***C08L 9/00*** *(2006.01)*
***C08K 5/18*** *(2006.01)*
***B60C 1/00*** *(2006.01)*
***C08L 21/00*** *(2006.01)*

(54) **RUBBER COMPOSITION FOR TIRE OUTER LAYER AND PNEUMATIC TIRE**

KAUTSCHUKZUSAMMENSETZUNG FÜR REIFENAUSSENSCHICHT UND LUFTREIFEN

COMPOSITION DE CAOUTCHOUC POUR COUCHE EXTÉRIEURE DE PNEUMATIQUE ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.12.2017 JP 2017232799**

(43) Date of publication of application:
**05.06.2019 Bulletin 2019/23**

(73) Proprietor: **Sumitomo Rubber Industries, Ltd.**
**Kobe-shi, Hyogo 651-0072 (JP)**

(72) Inventor: **MIYAZAKI, Tatsuya**
**Kobe-shi, Hyogo 651-0072 (JP)**

(74) Representative: **TBK**
**Bavariaring 4-6**
**80336 München (DE)**

(56) References cited:
**EP-A1- 3 216 827**
**US-A1- 2008 097 023**
**US-A1- 2016 177 072**
**US-A1- 2016 368 324**
**US-A1- 2017 015 812**
**US-A1- 2017 260 373**
**US-B2- 9 200 141**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 492 520 B1

## Description

BACKGROUND OF THE INVENTION

Field of the Invention

The present invention relates to a rubber composition for a tire outer layer and a pneumatic tire having a tire outer layer member produced using the rubber composition.

Description of the Background Art

In a tire outer layer member such as a tread and a sidewall, a wax and an antioxidant such as N-(1,3-dimethylbutyl)-N'-phenyl-p-phenylenediamine (6PPD) and 2,2,4-trimethyl-1,2-dihydroquinoline polymer (TMQ) are normally blended in order to inhibit occurrence of cracking due to ozone and progress of said cracking.

Japanese Patent No. 6018207 discloses a method in which low fuel consumption performance and the like are improved by a modified butadiene rubber, for silica, that has a low cis content.

As a result of examination conducted by the present inventor, ozone resistance tends to deteriorate when a butadiene rubber having a low cis content is blended. The reason for this is considered to be that, due to the low cis content, a high vinyl content, and a high trans content, the accumulation density of the polymer is low, and self-recovering property after occurrence of cracking becomes low, resulting in deterioration of crack growth resistance.

Furthermore, the above tendency is significant particularly in tires for light automobiles. The reason for this is considered to be that: an oil amount and a filler amount are reduced for emphasis on low fuel consumption performance; and the running distance tends to be short and thus there are fewer chances that a tire surface damaged by road surfaces is worn away.

US 2016/368324 (A1) relates to a pneumatic tire including a tread portion, the rubber composition for cap treads having an amount of phenylenediamine antioxidant of a specific value or less.

US 2016/177072 (A1) relates to a rubber composition for tires including a rubber component including at least one selected from the group consisting of a specific non-oil extended polybutadiene rubber and a specific oil extended polybutadiene rubber; a phenylenediamine antioxidant; a specific nonionic surfactant; and carbon black and/or silica.

US 2017/260373 (A1) relates to a rubber composition for tires containing a rubber component having a combined content of polybutadiene rubber, natural rubber, and polyisoprene rubber of 90% by mass or more based on 100% by mass of the rubber component; sulfur; and at least one nonionic surfactant selected from the group consisting of a Pluronic nonionic surfactant, and a nonionic surfactant.

US 2017/015812 (A1) relates to a rubber composition for tires, including a rubber component; a phenylenediamine antioxidant; and a masterbatch, the masterbatch containing a specific nonionic surfactant and a silica with specific BET value.

EP 3 216 827 (A1) relates to a rubber composition for tires, containing a rubber component having a combined content of polybutadiene rubber, natural rubber, and polyisoprene rubber of 80% by mass or more per 100% by mass of the rubber component, the rubber composition containing, per 100 parts by mass of the rubber component: 0.1 to 8.0 parts by mass of polyether having a glycol ether content of 80% by mass or more and a HLB of 3.5 to 19.0, the polyether excluding Pluronic nonionic surfactants; 2 to 70 parts by mass of carbon black; and 0.3 to 7.0 parts by mass of an antioxidant.

US 2013/184387 (A1) relates to a rubber composition comprising at least one rubber component selected from a dienic synthetic rubber and a natural rubber and, as incorporated therein, at least one nonionic surfactant selected from specific compounds.

US 2008/097023 (A1) relates to rubber composition for a tire containing 100 parts by weight of a rubber, 1 to 30 parts by weight of a polyether and 10 to 180 parts by weight of a filler.

The present invention has been made to solve the above-described problems, and an object of the present invention is to provide a rubber composition, for a tire outer layer, that can improve low fuel consumption performance and ozone resistance in a balanced manner, and a pneumatic tire using the rubber composition.

SUMMARY OF THE INVENTION

The present invention is directed to a rubber composition for a tire outer layer, the rubber composition containing: a rubber component containing a butadiene rubber; silica; a phenylenediamine antioxidant; and a surfactant having an hydrophilic-lipophilic balance (HLB) value of 5 to 12, wherein the butadiene rubber contains a nitrogen atom by being modified with a modifier having a nitrogen atom and has a cis content of not greater than 60% by mass, an amount of the butadiene rubber in 100% by mass of the rubber component is 3 to 50% by mass, and an amount of the phenylenediamine antioxidant is 1 to 10 parts by mass, an amount of the surfactant is 0.1 to 6 parts by mass, an amount of silica is not less than 30 parts by mass, and an amount of carbon black is not greater than 10 parts by mass, per 100 parts by mass of the rubber component.

The butadiene rubber is preferably an end-modified butadiene rubber.

The SP value of the surfactant is preferably 8 to 12.

An amount of an oil per 100 parts by mass of the rubber component is preferably not greater than 9 parts by mass.

The present invention is also directed to a pneumatic tire having a tire outer layer member produced using the rubber composition. Preferably, the tire outer layer member is selected from treads, sidewalls, clinches, and wings.

According to the present invention, the rubber composition for the tire outer layer contains a BR containing a nitrogen atom by being modified with a modifier having a nitrogen atom and having a cis content of not greater than 60% by mass, a phenylenediamine antioxidant, and a surfactant having an HLB value of 5 to 12, in predetermined amounts and contains carbon black in an amount less than a predetermined amount, and thus can improve low fuel consumption performance and ozone resistance in a balanced manner.

## DESCRIPTION OF THE PREFERRED EMBODIMENTS

The present invention is a rubber composition, for a tire outer layer, containing a BR containing a nitrogen atom by being modified with a modifier having a nitrogen atom and having a cis content of not greater than 60% by mass, a phenylenediamine antioxidant, and a surfactant having an HLB value of 5 to 12, in predetermined amounts and containing carbon black in an amount less than a predetermined amount and containing silica in an amount more than a predetermined amount.

When a butadiene rubber containing a nitrogen atom and/or having a cis content of not greater than 60% by mass is blended, low fuel consumption performance tends to improve but ozone resistance tends to decrease. Also when the amount of carbon black, which is a reinforcing material, is reduced, the same tendency is observed.

On the other hand, in the present invention, by blending a phenylenediamine antioxidant and a surfactant having an HLB value of 5 to 12 together with the above butadiene rubber, both low fuel consumption performance and ozone resistance can be achieved at favorable levels even when the amount of carbon black is reduced.

Such an effect is inferred to be brought due to the following action mechanism.

The phenylenediamine antioxidant such as 6PPD exerts an ozone cracking inhibition effect when bleeding on the surface of the rubber composition. In the above rubber composition, the above surfactant serves as a carrier for the phenylenediamine antioxidant, so that the concentration gradient of the phenylenediamine antioxidant in the rubber composition decreases, and the phenylenediamine antioxidant easily bleeds on the surface of the rubber composition. Accordingly, favorable ozone resistance is considered to be also achieved while the low fuel consumption performance improving effect by the butadiene rubber and the low fuel consumption performance improving effect due to reduction of the amount of carbon black are exerted.

### <Rubber Component>

In the above rubber composition, a butadiene rubber (BR) containing a nitrogen atom by being modified with a modifier having a nitrogen atom and having a cis content of not greater than 60% by mass is used as a rubber component. The BR satisfies both conditions from the viewpoint of low fuel consumption performance.

Examples of the form of the BR containing a nitrogen atom include a form in which the main chain of a BR is modified with a modifier containing a nitrogen atom (a main chain-modified BR) and a form in which an end of an BR is modified with a modifier containing a nitrogen atom (an end-modified BR). From the viewpoint of low fuel consumption performance, the end-modified BR is preferable.

Even when the BR is a modified BR, the BR is not necessarily limited to a BR modified with a modifier having a nitrogen atom, and may be a BR modified with another modifier.

In the case where the modified BR is a modified BR for silica, a modifier having a functional group, such as an amino group, an amide group, an alkoxysilyl group, an isocyanate group, an imino group, an imidazole group, a urea group, an ether group, a carbonyl group, an oxycarbonyl group, a sulfide group, a disulfide group, a sulfonyl group, a sulfinyl group, a thiocarbonyl group, an ammonium group, an imido group, a hydrazo group, an azo group, a diazo group, a carboxyl group, a nitrile group, a pyridyl group, an alkoxy group, a hydroxyl group, an oxy group, and an epoxy group, can be used as a modifier. These functional groups may each have a substituent. From the viewpoint of low fuel consumption performance, the modifier is a modifier having a functional group containing a nitrogen atom, and preferably a compound represented by formula (1) below.

[Chem. 1]

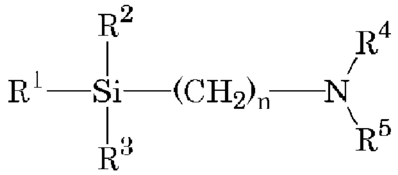

(1)

(wherein $R^1$, $R^2$, and $R^3$ are the same or different from each other and each represent an alkyl group, an alkoxy group, a silyloxy group, an acetal group, a carboxyl group (-COOH), a mercapto group (-SH), or a derivative thereof. $R^4$ and $R^5$ are the same or different from each other and each represent a hydrogen atom or an alkyl group. $R^4$ and $R^5$ may be linked together to form a ring structure together with a nitrogen atom. "n" represents an integer.)

In formula (1), as $R^1$, $R^2$, and $R^3$, an alkoxy group (an alkoxy group preferably having 1 to 8 carbon atoms, more preferably 1 to 4 carbon atoms) is suitable. As $R^4$ and $R^5$, an alkyl group (preferably, an alkyl group having 1 to 3 carbon atoms) is suitable. The integer "n" is preferably 1 to 5, more preferably 2 to 4, and further preferably 3. In addition, when $R^4$ and $R^5$ are linked together to form a ring structure together with a nitrogen atom, a four to eight-membered ring is preferably formed. Examples of the alkoxy group include cycloalkoxy groups (a cyclohexyloxy group, etc.) and aryloxy groups (a phenoxy group, a benzyloxy group, etc.).

Specific examples of the compound represented by formula (1) include 2-dimethylaminoethyl trimethoxysilane, 3-dimethylaminopropyl trimethoxysilane, 2-dimethylaminoethyl triethoxysilane, 3-dimethylaminopropyl triethoxysilane, 2-diethylaminoethyl trimethoxysilane, 3-diethylaminopropyl trimethoxysilane, 2-diethylaminoethyl triethoxysilane, and 3-diethylaminopropyl triethoxysilane. These compounds may be used individually, or two or more of these compounds may be used in combination. Among them, 3-dimethylaminopropyl trimethoxysilane, 3-dimethylaminopropyl triethoxysilane, and 3-diethylaminopropyl trimethoxysilane are preferable.

In the case where the modified BR is a modified BR for carbon black (CB), the modified BR is preferably a tin-modified BR modified with a tin compound. The tin-modified BR is suitably a BR having a vinyl content of 5 to 50% by mass, Mw/Mn of not greater than 2.0, and a tin atom content of 50 to 3000 ppm.

In the present specification, a cis content (cis-1,4-bond butadiene unit content) and a vinyl content (1,2-bond butadiene unit content) can be measured by infrared absorption spectrometry. In addition, a weight-average molecular weight (Mw) and a number average molecular weight (Mn) can be obtained by conversion, based on polystyrene standard, of a value measured by gel permeation chromatography (GPC) (GPC-8000 series available from Tosoh Corporation, detector: differential refractometer, column: TSK GEL SUPERMULTIPORE HZ-M available from Tosoh Corporation).

The cis content of the BR is not greater than 60% by mass, preferably not greater than 50% by mass, and further preferably not greater than 38%, and is preferably not less than 10% by mass and more preferably not less than 20% by mass. When the cis content is in the above range, the advantageous effects of the present invention tend to be more favorably achieved.

The vinyl content of the BR is preferably not greater than 30% by mass and more preferably not greater than 15% by mass, and is preferably not less than 1% by mass and more preferably not less than 10% by mass. When the vinyl content is in the above range, the advantageous effects of the present invention tend to be more favorably achieved.

As the BR, for example, products of Sumitomo Chemical Co., Ltd., Zeon Corporation, etc., can be used.

The amount of the BR in 100% by mass of the rubber component only needs to be 3 to 50% by mass, but is preferably not less than 10% by mass and more preferably not less than 15% by mass, and is preferably not greater than 40% by mass and more preferably not greater than 30% by mass. When the amount is in the above range, the advantageous effects of the present invention tend to be more favorably achieved.

Examples of usable rubber components other than the BR include: diene rubbers such as isoprene rubber (IR), epoxidized isoprene rubber, hydrogenated isoprene rubber, grafted isoprene rubber, natural rubber (NR), deproteinized natural rubber (DPNR), ultra pure natural rubber (UPNR), epoxidized natural rubber (ENR), hydrogenated natural rubber (HNR), grafted natural rubber, styrene-butadiene rubber (SBR), butadiene rubber (BR), styrene-isoprene-butadiene rubber (SIBR), chloroprene rubber (CR), acrylonitrile-butadiene rubber (NBR); and non-diene rubbers such as ethylene-propylene-diene rubber (EPDM), isobutylene-isoprene rubber (IIR), and halogenated isobutylene-isoprene rubber (X-IIR). In addition, a BR other than the above BR (another BR) can be used. These rubbers may be used individually, or two or more of these rubbers may be used in combination. Among them, another BR, SBR, and NR are preferable, and another BR and SBR are more preferable.

As another BR, for example, BRs that are generally used in the tire industry, such as a BR having a cis content greater than 90% by mass (high-cis BR) and a BR containing 1,2-syndiotactic polybutadiene crystal (SPB), can be used. These BRs may be used individually, or two or more of these BRs may be used in combination. Among them, a high-cis BR is preferable.

The high-cis BR is preferably a BR synthesized by using a rare earth element catalyst such as neodymium (rare earth BR). As the rare earth BR, products of LANXESS, etc., can be used.

The ratio (Mw/Mn) of the weight-average molecular weight (Mw) to the number average molecular weight (Mn) of the rare earth BR is preferably not less than 1.2 and more preferably not less than 1.4, and is preferably not greater than 4.5, more preferably not greater than 2.5, and further preferably not greater than 1.8. When the ratio (Mw/Mn) is in the above range, the advantageous effects of the present invention tend to be more favorably achieved.

The Mw of the rare earth BR is preferably not less than 200 thousand and more preferably not less than 500 thousand, and is preferably not greater than 900 thousand and more preferably not greater than 700 thousand. When the Mw is in the above range, the advantageous effects of the present invention tend to be more favorably achieved.

The Mn of the rare earth BR is preferably not less than 100 thousand and more preferably not less than 280 thousand, and is preferably not greater than 600 thousand and more preferably not greater than 400 thousand. When the Mn is in the above range, the advantageous effects of the present invention tend to be more favorably achieved.

The cis content of the rare earth BR is preferably not less than 95% by mass and more preferably not less than 97% by mass, and the upper limit thereof is not particularly limited. When the cis content is in the above range, the advantageous effects of the present invention tend to be more favorably achieved.

The vinyl content of the rare earth BR is preferably not greater than 1.5% by mass and more preferably not greater than 0.7% by mass, and the lower limit thereof is not particularly limited. When the vinyl content is in the above range, the advantageous effects of the present invention tend to be more favorably achieved.

In the case of containing another BR, the amount of the other BR in 100% by mass of the rubber component is preferably not less than 5% by mass and more preferably not less than 10% by mass, and is preferably not greater than 30% by mass and more preferably not greater than 20% by mass. When the amount is in the above range, the advantageous effects of the present invention tend to be more favorably achieved.

The SBR is not particularly limited, and, as the SBR, for example, SBRs that are generally used in the tire industry, such as an emulsion-polymerized SBR (E-SBR) and a solution-polymerized SBR (S-SBR), can be used. These SBRs may be used individually, or two or more of these SBRs may be used in combination.

As the SBR, SBRs manufactured by and available from Sumitomo Chemical Co., Ltd., JSR Corporation, Asahi Kasei Corporation, Zeon Corporation, etc., can be used.

The SBR may be a modified SBR. As the modified SBR, an SBR modified with a modifier that is the same as for the above-described modified BR can be used, and an SBR of which an end is modified with the compound represented by formula (1) is suitable.

The bound styrene content of the SBR is preferably not greater than 50% by mass, more preferably not greater than 45% by mass, further preferably not greater than 40% by mass, and particularly preferably not greater than 35% by mass, and is preferably not less than 15% by mass and more preferably not less than 27% by mass. When the bound styrene content is in the above range, the advantageous effects of the present invention tend to be more favorably achieved.

The bound styrene content is calculated by $^1$H-NMR measurement.

In the case of containing an SBR, the amount of the SBR in 100% by mass of the rubber component is preferably not less than 30% by mass, more preferably not less than 60% by mass, and further preferably not less than 75% by mass, and is preferably not greater than 90% by mass and more preferably not greater than 80% by mass. When the amount is in the above range, the advantageous effects of the present invention tend to be more favorably achieved.

The NR is not particularly limited, and, as the NR, for example, NRs that are generally used in the tire industry, such as SIR20, RSS#3, and TSR20, can be used.

In the case of containing an NR, the amount of the NR in 100% by mass of the rubber component is preferably not less than 5% by mass and more preferably not less than 10% by mass, and is preferably not greater than 30% by mass and more preferably not greater than 20% by mass. When the amount is in the above range, the advantageous effects of the present invention tend to be more favorably achieved.

<Surfactant>

The above surfactant has an HLB value of 5 to 12. The HLB value is an indicator for hydrophilicity and hydrophobicity of the surfactant. When the HLB value is in the above range, the compatibility of the surfactant with rubber is good, and the surfactant can be favorably dispersed in the rubber composition.

In the present specification, the surfactant has a hydrophilic group and a hydrophobic group. In addition, the HLB value is a value calculated by the Oda method, not a value calculated by the Griffin method. The Oda method is, for example, the method described on page 212 of "Kaimenkasseizai Nyumon (Introduction to Surfactants)" [published by Sanyo Chemical Industries, Ltd. in 2007, written by Takehiko Fujimoto].

$$HLB \approx 10 \times \text{inorganicity/organicity}$$

The HLB value of the surfactant only needs to be 5 to 12, but is preferably not less than 6 and more preferably not less than 8, and is preferably not greater than 11.5. When the HLB value is in the above range, the advantageous effects of the present invention tend to be more favorably achieved.

The SP value of the surfactant is preferably not less than 8 and more preferably not less than 9, and is preferably not greater than 12 and more preferably not greater than 11. When the SP value is in the above range, the advantageous effects of the present invention tend to be more favorably achieved.

In the present specification, the SP value means a solubility parameter calculated by the Hoy method on the basis of the structure of the compound. The Hoy method is, for example, the calculation method described in K. L. Hoy "Table of Solubility Parameters", Solvent and Coatings Materials Research and Development Department, Union Carbites Corp. (1985).

As the surfactant, for example, at least one surfactant selected from the group consisting of a compound represented by formula (I) below, a compound represented by formula (II) below, a compound represented by formula (III) below, a compound represented by formula (IV) below, a polyether (A), and a fatty acid amide (B), can be used.

[Chem. 2]

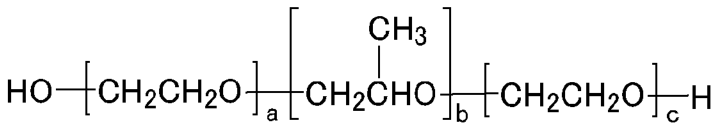

(I)

(wherein, "a", "b", and "c" each represent a natural number.)

[Chem. 3]

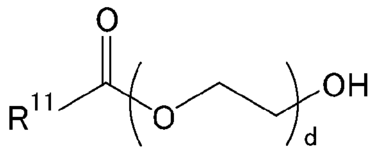

(II)

(wherein $R^{11}$ represents a hydrocarbon group having 6 to 26 carbon atoms, and "d" represents a natural number.)

[Chem. 4]

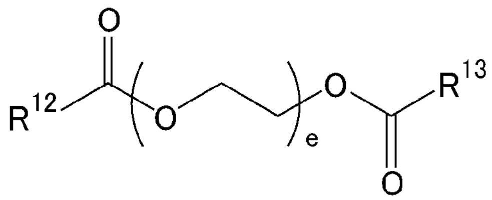

(III)

(wherein $R^{12}$ and $R^{13}$ are the same or different from each other and each represent a hydrocarbon group having 6 to 26 carbon atoms, and "e" represents a natural number.)

[Chem. 5]

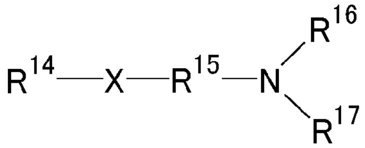

(IV)

(wherein X represents -CONH- or -COO-; $R^{14}$ represents an alkyl group having 7 to 23 carbon atoms or an alkenyl group

having 7 to 23 carbon atoms; $R^{15}$ represents an alkylene group having 1 to 3 carbon atoms; and $R^{16}$ and $R^{17}$ each independently represent a hydrogen atom, an alkyl group having 1 to 3 carbon atoms, or a hydroxyalkyl group having 1 to 3 carbon atoms, and at least one of $R^{16}$ and $R^{17}$ is a hydroxyalkyl group.)

First, the compound represented by formula (I) will be described.

The compound represented by formula (I) is a Pluronic nonionic surfactant and is also called polyoxyethylene polyoxypropylene glycol, polyoxyethylene polyoxypropylene block polymer, or polypropylene glycol ethylene oxide adduct. The Pluronic nonionic surfactant has a hydrophilic group composed of an ethylene oxide structure at each side, and has a hydrophobic group composed of a propylene oxide structure between the hydrophilic groups.

The degree of polymerization of a polypropylene oxide block ("b" in formula (I)) and the added amount of polyethylene oxide ("a" + "c" in formula (I)) of the compound represented by formula (I) are not particularly limited, and can be selected as appropriate according to use conditions/purpose and the like. As the proportion of the polypropylene oxide block increases, the compatibility with rubber increases, and the speed at which the surfactant shifts to the rubber surface tends to decrease. For the reason that the advantageous effects of the present invention are more favorably achieved, the degree of polymerization of the polypropylene oxide block ("b" in formula (I)) is preferably not less than 10, more preferably not less than 20, and further preferably not less than 30, and is preferably not greater than 100, more preferably not greater than 60, and further preferably not greater than 40. Similarly, the added amount of polyethylene oxide ("a" + "c" in formula (I)) is preferably not less than 3, more preferably not less than 10, and further preferably not less than 25, and is preferably not greater than 100, more preferably not greater than 55, and further preferably not greater than 30.

As the compound represented by formula (I), products manufactured by and available from BASF Japan Ltd., Sanyo Chemical Industries, Ltd., ADEKA Corporation, DKS Co. Ltd., NOF Corporation, etc., can be used. These products may be used individually, or two or more of these products may be used in combination.

Even when complex bleeding matter including the compound represented by formula (I), an antioxidant, a wax, etc., flows out due to rain or the like, the color of a tire returns to black in several days. Thus, the use of the compound represented by formula (I) is considered to allow a coating on the surface of a tire tread to be reproduced in several days.

Next, the compound represented by formula (II) will be described.

$R^{11}$ in formula (II) represents a hydrocarbon group having 6 to 26 carbon atoms. When the number of carbon atoms of the hydrocarbon group of $R^{11}$ is in the above range, a suitable bloom rate is achieved, so that the advantageous effects of the present invention are more favorably achieved.

The number of carbon atoms of the hydrocarbon group as $R^{11}$ is preferably not less than 8, more preferably not less than 10, and further preferably not less than 14, and is preferably not greater than 24, more preferably not greater than 22, and further preferably not greater than 20.

Examples of the hydrocarbon group having 6 to 26 carbon atoms as $R^{11}$ include an alkenyl group having 6 to 26 carbon atoms, an alkynyl group having 6 to 26 carbon atoms, and an alkyl group having 6 to 26 carbon atoms.

Examples of the alkenyl group having 6 to 26 carbon atoms include 1-hexenyl group, 2-hexenyl group, 1-octenyl group, decenyl group, undecenyl group, dodecenyl group, tridecenyl group, tetradecenyl group, pentadecenyl group, heptadecenyl group, octadecenyl group, icosenyl group, tricosenyl group, and hexacosenyl group.

Examples of the alkynyl group having 6 to 26 carbon atoms include hexynyl group, heptynyl group, octynyl group, nonynyl group, decynyl group, undecynyl group, dodecynyl group, tridecynyl group, tetradecynyl group, pentadecynyl group, heptadecynyl group, octadecynyl group, icosynyl group, tricosynyl group, and hexacosynyl group.

Examples of the alkyl group having 6 to 26 carbon atoms include hexyl group, heptyl group, 2-ethylhexyl group, octyl group, nonyl group, decyl group, undecyl group, dodecyl group, tridecyl group, tetradecyl group, pentadecyl group, octadecyl group, heptadecyl group, octadecyl group, icosyl group, tricosyl group, and hexacosyl group.

$R^{11}$ is preferably an alkenyl group having 6 to 26 carbon atoms and an alkynyl group having 6 to 26 carbon atoms, and more preferably an alkenyl group having 6 to 26 carbon atoms.

As "d" (natural number) in formula (II) increases, the HLB value, which represents hydrophilic-lipophilic balance, increases, and the speed by which the surfactant shifts to the rubber surface tends to increase. The value of "d" is not particularly limited, and can be selected as appropriate according to use conditions/purpose and the like, but is preferably not less than 2, more preferably not less than 4, further preferably not less than 8, and particularly preferably not less than 10, and is preferably not greater than 25, more preferably not greater than 20, further preferably not greater than 16, and particularly preferably not greater than 14.

The compound represented by formula (II) is a nonionic surfactant, and examples thereof include ethylene glycol monooleate, ethylene glycol monopalmeate, ethylene glycol monopalmitate, ethylene glycol monovaccenate, ethylene glycol monolinoleate, ethylene glycol monolinolenate, ethylene glycol monoarachidonate, ethylene glycol monostearate, ethylene glycol monocetylate, and ethylene glycol monolaurate. These compounds may be used individually, or two or more of these compounds may be used in combination. Among them, from the viewpoint of ready availability and cost, ethylene glycol monooleate, ethylene glycol monolaurate, ethylene glycol monostearate, and ethylene glycol monopalmitate are preferable.

Next, the compound represented by formula (III) will be described.

$R^{12}$ and $R^{13}$ in formula (III) are the same or different from each other and each represent a hydrocarbon group having 6 to 26 carbon atoms. When the number of carbon atoms of the hydrocarbon group as $R^{12}$ and $R^{13}$ is in the above range, a suitable bloom rate is achieved, so that the advantageous effects of the present invention are more favorably achieved.

The number of carbon atoms of the hydrocarbon group as $R^{12}$ and $R^{13}$ is preferably not less than 8, more preferably not less than 10, and further preferably not less than 14, and is preferably not greater than 24, more preferably not greater than 22, and further preferably not greater than 20.

Examples of the hydrocarbon group having 6 to 26 carbon atoms as $R^{12}$ and $R^{13}$ include an alkenyl group having 6 to 26 carbon atoms, an alkynyl group having 6 to 26 carbon atoms, and an alkyl group having 6 to 26 carbon atoms.

Examples of the alkenyl group having 6 to 26 carbon atoms, the alkynyl group having 6 to 26 carbon atoms, and the alkyl group having 6 to 26 carbon atoms include the same groups as those described above for the case of $R^{11}$.

$R^{12}$ and $R^{13}$ are each preferably an alkenyl group having 6 to 26 carbon atoms and an alkynyl group having 6 to 26 carbon atoms, and more preferably an alkenyl group having 6 to 26 carbon atoms.

As "e" (natural number) in formula (III) increases, the HLB value, which represents hydrophilic-lipophilic balance, increases, and the speed by which the surfactant shifts to the rubber surface tends to increase. The value of "e" is not particularly limited, and can be selected as appropriate according to use conditions/purpose and the like. "e" is preferably not less than 2, more preferably not less than 4, further preferably not less than 8, and particularly preferably not less than 10, and is preferably not greater than 25, more preferably not greater than 20, further preferably not greater than 16, and particularly preferably not greater than 14.

The compound represented by formula (III) is a nonionic surfactant, and examples thereof include ethylene glycol dioleate, ethylene glycol dipalmeate, ethylene glycol dipalmitate, ethylene glycol divaccenate, ethylene glycol dilinoleate, ethylene glycol dilinolenate, ethylene glycol diarachidonate, ethylene glycol distearate, ethylene glycol dicetylate, and ethylene glycol dilaurate. These compounds may be used individually, or two or more of these compounds may be used in combination. Among them, from the viewpoint of ready availability and cost, ethylene glycol dioleate, ethylene glycol dilaurate, ethylene glycol distearate, and ethylene glycol dipalmitate are preferable.

Next, the compound represented by formula (IV) will be described.

X represents -CONH- or -COO-. X is preferably -CONH-, for the reason that the advantageous effects of the present invention are more favorably achieved.

$R^{14}$ is an alkyl group having 7 to 23 carbon atoms or an alkenyl group having 7 to 23 carbon atoms. The alkyl group and the alkenyl group may be linear, branched, or cyclic, but are preferably linear. Examples of the alkyl group include octyl group, nonyl group, isononyl group, decyl group, undecyl group, dodecyl group, tridecyl group, isotridecyl group, tetradecyl group, hexadecyl group, heptadecyl group, octadecyl group, nonadecyl group, henicosyl group, and tricosyl group, and examples of the alkenyl group include octenyl group, nonenyl group, decenyl group, and heptadecenyl group.

For the reason that the advantageous effects of the present invention are more favorably achieved, the numbers of carbon atoms of the alkyl group and the alkenyl group as $R^{14}$ are each preferably not less than 9 and more preferably not less than 11, and is preferably not greater than 21 and more preferably not greater than 19.

For the reason that the advantageous effects of the present invention are more favorably achieved, $R^{14}$ is preferably the alkyl group.

$R^{15}$ is an alkylene group having 1 to 3 carbon atoms. The alkylene group may be linear or branched, but is preferably linear.

Examples of the alkylene group having 1 to 3 carbon atoms include methylene group, ethylene group, and propylene group.

$R^{16}$ and $R^{17}$ each independently represent a hydrogen atom, an alkyl group having 1 to 3 carbon atoms, or a hydroxyalkyl group having 1 to 3 carbon atoms, and at least one of $R^{16}$ and $R^{17}$ is a hydroxyalkyl group.

The alkyl group having 1 to 3 carbon atoms may be linear, branched, or cyclic, but is preferably linear. Examples of the alkyl group having 1 to 3 carbon atoms include methyl group, ethyl group, and propyl group.

The hydroxyalkyl group having 1 to 3 carbon atoms may be linear, branched, or cyclic, but is preferably linear. Examples of the alkyl group of the hydroxyalkyl group having 1 to 3 carbon atoms (that is, an alkyl group having 1 to 3 carbon atoms) include methyl group, ethyl group, and propyl group.

For the reason that the advantageous effects of the present invention are more favorably achieved, preferably, one of $R^{16}$ and $R^{17}$ is a hydrogen atom, and the other of $R^{16}$ and $R^{17}$ is a hydroxyalkyl group.

Specific examples of the compound represented by formula (IV) include: fatty acid amide ethylamino ethanols such as lauric acid amide ethylamino ethanol and stearic acid amide ethylamino ethanol, fatty acid ester ethylamino ethanols such as lauric acid ester ethylamino ethanol and stearic acid ester ethylamino ethanol, stearic acid amide (N-methyl)ethylamino ethanol, stearic acid amide (N-ethanol)ethylamino ethanol, lauric acid amide methylamino ethanol, stearic acid amide methylamino ethanol, lauric acid amide propylamino ethanol, stearic acid amide propylamino ethanol,

lauric acid amide ethylamino methanol, stearic acid amide ethylamino methanol, lauric acid amide ethylamino propanol, stearic acid amide ethylamino propanol, stearic acid ester (N-methyl)ethylamino ethanol, stearic acid ester (N-ethanol)ethylamino ethanol, lauric acid ester methylamino ethanol, stearic acid ester methylamino ethanol, lauric acid ester propylamino ethanol, stearic acid ester propylamino ethanol, lauric acid ester ethylamino methanol, stearic acid ester ethylamino methanol, lauric acid ester ethylamino propanol, and stearic acid ester ethylamino propanol. These compounds may be used individually, or two or more of these compounds may be used in combination. Among them, fatty acid amide ethylamino ethanols are preferable, and lauric acid amide ethylamino ethanol is more preferable, for the reason that the advantageous effects of the present invention are more favorably achieved.

The compound represented by formula (IV) can be synthesized by a known method, and a fatty acid amide ethylamino ethanol can be obtained, for example, by mixing a fatty acid or a fatty acid methyl ester and 2-(2-aminoethylamino)ethanol, heating the mixture at 120°C to 180°C, and distilling off the generated water or methanol.

Next, the polyether (A) will be described.

As the polyether (A), a polyether in which the average mass of two or more consecutive polyethylene oxide units is not greater than 85% of the mass of polyethylene oxide, that is, a polyether having a content of consecutive ethylene oxide units of not greater than 85%, can be suitably used.

The term "content of consecutive ethylene oxide units" represents the proportion of two or more consecutive polyethylene oxide units relative to the total polyethylene oxide units contained in the polyether, and is calculated by the following equation.

$$\text{Content of consecutive ethylene oxide units (\%)} = \text{(average number of two or more consecutive ethylene oxide units)/(total number of ethylene oxide units)} \times 100\ (\%)$$

The term "two or more consecutive polyethylene oxide units" refers to a sequence in which two or more ethylene oxide (EO) units are linked, as represented by, for example, -EO-EO- (two consecutive units) or -EO-EO-EO- (three consecutive units).

For example, in the case of a polyether including four ethylene oxide (EO) monomers and one propylene oxide (PO) monomer, the content of consecutive ethylene oxide units is calculated as follows.

[Table 1]

| Unit arrangement | Probability of indicated unit arrangement | Number of two or more consecutive EO units | Number of nonconsecutive EO units |
|---|---|---|---|
| HO-PO-EO-EO-EO-EO-H | 1/5 | 4 | 0 |
| HO-EO-PO-EO-EO-EO-H | 1/5 | 3 | 1 |
| HO-EO-EO-PO-EO-EO-H | 1/5 | 4 | 0 |
| HO-EO-EO-EO-PO-EO-H | 1/5 | 3 | 1 |
| HO-EO-EO-EO-EO-PO-H | 1/5 | 4 | 0 |

$$\begin{aligned}&\text{Content of consecutive ethylene oxide units (\%)}\\&= \text{(average number of two or more consecutive EO units)/(total number of EO units)} \times 100\ (\%)\\&= (1/5 \times 4 + 1/5 \times 3 + 1/5 \times 4 + 1/5 \times 3 + 1/5 \times 4)/4 \times 100\ (\%)\\&= 3.6/4 \times 100 = 90\ (\%)\end{aligned}$$

The content of consecutive ethylene oxide units of the polyether (A) is preferably not greater than 85% by mass, more preferably not greater than 80% by mass, and further preferably not greater than 75% by mass. The lower limit

thereof is not particularly limited. When the content is in the above range, the advantageous effects of the present invention tend to be more favorably achieved.

The number average molecular weight (a value obtained by conversion using styrene) of the polyether (A) is preferably not less than 300, more preferably not less than 1,500, and further preferably not less than 2,000. In addition, the number average molecular weight is preferably not greater than 50,000, more preferably not greater than 40,000, and further preferably not greater than 20,000. When the number average molecular weight is in the above range, the advantageous effects of the present invention tend to be more favorably achieved.

The polyether (A) is preferably represented by $R^{21}$-O-($R^{22}$-O)$_x$-$R^{23}$ or $R^{24}$-{(O$R^{22}$-O)x-$R^{21}$}$_y$. $R^{21}$ and $R^{23}$ are each a hydrogen atom or an aliphatic hydrocarbon group, an alicyclic hydrocarbon group, an aromatic hydrocarbon group, or an alkanoyl group having 1 to 20 carbon atoms, and may each be a group in which a hydrogen atom bound to a carbon atom is substituted with an aromatic hydrocarbon group. $R^{22}$s are the same or different from each other, are each a divalent aliphatic hydrocarbon group or a divalent alicyclic hydrocarbon group having 2 to 10 carbon atoms, and may each be a group in which a hydrogen atom bound to a carbon atom is substituted with an aromatic hydrocarbon group. $R^{24}$ is a residue obtained by eliminating a hydroxyl group from a compound (a) having three or more hydroxyl groups. "x" and "y" each represent an integer, and can be arbitrarily selected as long as the content of consecutive ethylene oxide units satisfies the aforementioned range, but is preferably 1 to 40.

$R^{21}$ and $R^{23}$ are not particularly limited, and examples thereof include methyl group, ethyl group, propyl group, butyl group, pentyl group, hexyl group, octyl group, stearyl group, oleyl group, cyclohexyl group, adamantyl group, phenyl group, toluyl group, naphthyl group, pyridyl group, acetyl group, propanoyl group, butanoyl group, hexinoyl group, octinoyl group, octadecanoyl group, oleoyl group, and benzoyl group.

$R^{22}$s are not particularly limited, and examples thereof include ethylene group, propane-1,2-diyl group, butane-1,2-diyl group, (2-methyl)propane-1,2-diyl group, hexane-1,2-diyl group, octane-1,2-diyl group, (1-phenyl)ethane-1,2-diyl group, (1-phenyl)propane-1,2-diyl group, cyclohexane-1,2-diyl group, and cyclooctane-1,2-diyl group.

The compound (a) having three or more hydroxyl groups is not particularly limited, and examples thereof include glycerol, diglycerol, polyglycerol, monosaccharides, polysaccharides, trimethylolpropane, and pentaerythritol.

Examples of the polyether (A) include: polyalkylene glycols obtained by homopolymerizing or copolymerizing oxirane compounds such as ethylene oxide, propylene oxide, 1,2-butylene oxide, 2,3-butylene oxide, 2-methylpropylene oxide, and cyclohexene oxide; compounds obtained by substituting the hydrogen atoms of the hydroxyl groups of the polyalkylene glycols with alkyl groups (polyoxyalkylene alkyl ethers, polyoxyalkylene dialkyl ethers, etc.); compounds obtained by causing dehydration reaction of the hydroxyl groups of the polyalkylene glycols with organic acids; and alkylene oxide adducts of polyhydric alcohols. These polyethers may be used individually, or two or more of these polyethers may be used in combination.

As the polyether (A), products manufactured by and available from Sanyo Chemical Industries, Ltd., ADEKA Corporation, Lion Specialty Chemicals Co., Ltd., etc., can be used.

Next, the fatty acid amide (B) will be described.

The fatty acid amide (B) may be a saturated fatty acid amide or may be an unsaturated fatty acid amide. Examples of the saturated fatty acid amide include N-(1-oxooctadecyl)sarcosine, stearic acid amide, and behenic acid amide. Examples of the unsaturated fatty acid amide include oleic acid amide and erucic acid amide. These amides may be used individually, or two or more of these amides may be used in combination.

The fatty acid amide (B) may be a fatty acid alkanolamide. The fatty acid alkanolamide may be a fatty acid monoalkanolamide or a fatty acid dialkanolamide, but is preferably a fatty acid alkanolamide having a hydroxyalkyl group having 2 to 3 carbon atoms. Specific examples of the fatty acid alkanolamide include palmitic acid monoethanolamide, palmitic acid methylethanolamide, palmitic acid diethanolamide, oleic acid monoethanolamide, oleic acid methylethanolamide, oleic acid diethanolamide, lauric acid monoethanolamide, lauric acid methylethanolamide, lauric acid diethanolamide, palm kernel oil fatty acid monoethanolamide, palm kernel oil fatty acid methylethanolamide, palm kernel oil fatty acid diethanolamide, palm oil fatty acid monoethanolamide, palm oil fatty acid methylethanolamide, and palm oil fatty acid diethanolamide. These fatty acid alkanolamides may be used individually, or two or more of these fatty acid alkanolamides may be used in combination. Among them, palm oil fatty acid methylethanolamide is preferable.

As the fatty acid amide (B), products manufactured by and available from NOF Corporation, Kao Corporation, etc., can be used.

The fatty acid amide (B) may be a mixture of a fatty acid metal salt.

The fatty acid that forms the fatty acid metal salt is not particularly limited, examples thereof include saturated or unsaturated fatty acids (saturated or unsaturated fatty acids preferably having 6 to 28 carbon atoms (more preferably having 10 to 25 carbon atoms, and further preferably having 14 to 20 carbon atoms), and specific examples thereof include lauric acid, myristic acid, palmitic acid, stearic acid, oleic acid, linolic acid, linolenic acid, arachidic acid, behenic acid, and nervonic acid. These fatty acids may be used individually, or two or more of these fatty acids may be used in combination. Among them, saturated fatty acids are preferable, and saturated fatty acids having 14 to 20 carbon atoms are more preferable.

Examples of the metal that forms the fatty acid metal salt include alkali metals such as potassium and sodium, alkaline earth metals such as magnesium, calcium, and barium, zinc, nickel, and molybdenum. These metals may be used individually, or two or more of these metals may be used in combination. Among them, zinc and calcium are preferable.

As the mixture of the fatty acid amide (B) and the fatty acid metal salt, WB16 manufactured by Struktol Company of America, which is a mixture of fatty acid calcium and fatty acid amide, etc., can be used.

The compound represented by formula (IV) is not included in the fatty acid amide (B).

Among the surfactants described above, the compound represented by formula (I), the compound represented by formula (IV), the polyether (A), and the fatty acid amide (B) are preferable, for the reason that the advantageous effects of the present invention are more favorably achieved. Furthermore, the compound represented by formula (I) is preferable from the viewpoint of being advantageous in terms of ozone resistance and wet grip performance, and the fatty acid amide (B) is preferable from the viewpoint of being advantageous in terms of mold releasability.

The amount of the surfactant per 100 parts by mass of the rubber component only needs to be 0.1 to 6 parts by mass, but is preferably not less than 0.2 parts by mass, more preferably not less than 0.5 parts by mass, and further preferably not less than 0.7 parts by mass, and is preferably not greater than 5 parts by mass and more preferably not greater than 4 parts by mass. When the amount is in the above range, the advantageous effects of the present invention tend to be more favorably achieved.

<Antioxidant>

The rubber composition contains a phenylenediamine antioxidant.

The phenylenediamine antioxidant is not particularly limited, and examples thereof include N-isopropyl-N'-phenyl-p-phenylenediamine, N-(1 ,3-dimethylbutyl)-N' -phenyl-p-phenylenediamine, N,N'-di-2-naphthyl-p-phenylenediamine. These phenylenediamine antioxidants may be used individually, or two or more of these phenylenediamine antioxidants may be used in combination. Among them, N-(1,3-dimethylbutyl)-N'-phenyl-p-phenylenediamine (6PPD) is preferable.

As the phenylenediamine antioxidant, for example, products of Seiko Chemical, Co., Ltd., Sumitomo Chemical Co., Ltd., Ouchi Shinko Chemical Industrial Co., Ltd., Flexsys, etc., can be used.

The amount of the phenylenediamine antioxidant per 100 parts by mass of the rubber component only needs to be 1 to 10 parts by mass, but is preferably not less than 1.5 parts by mass and more preferably not less than 2 parts by mass, and is preferably not greater than 6 parts by mass and more preferably not greater than 5 parts by mass. When the amount is in the above range, the advantageous effects of the present invention tend to be more favorably achieved.

The phenylenediamine antioxidant may be used in combination with another antioxidant.

The other antioxidant is not particularly limited, and examples thereof include: naphthylamine antioxidants such as phenyl-α-naphthylamine; diphenylamine antioxidants such as octylated diphenylamine and 4,4'-bis(α,α'-dimethylbenzyl)diphenylamine; quinoline antioxidants such as 2,2,4-trimethyl-1,2-dihydroquinoline polymer; monophenol antioxidants such as 2,6-di-t-butyl-4-methylphenol and styrenated phenol; and bis-, tris-, and poly-phenol antioxidants such as tetrakis-[methylene-3-(3',5'-di-t-butyl-4'-hydroxyphenyl)propionate]methane. These antioxidants may be used individually, or two or more of these antioxidants may be used in combination. Among them, quinoline antioxidants are preferable, and 2,2,4-trimethyl-1,2-dihydroquinoline polymer (TMQ) is more preferable.

In the case of containing another antioxidant, the amount of the other antioxidant per 100 parts by mass of the rubber component is preferably not less than 0.1 parts by mass and more preferably not less than 0.5 parts by mass, and is preferably not greater than 3 parts by mass and more preferably not greater than 2 parts by mass. When the amount is in the above range, the advantageous effects of the present invention tend to be more favorably achieved.

<Paraffin Wax>

The rubber composition preferably contains a paraffin wax. Accordingly, more favorable ozone resistance is achieved.

The paraffin wax can be defined as an alkane having 20 or more carbon atoms, but is preferably a wax mainly containing a normal alkane (linear alkane) having 20 or more carbon atoms (in the present specification, a normal alkane having 20 or more carbon atoms is also referred to as merely as "normal alkane"), for the reason that good ozone resistance (ozone cracking performance) is achieved in a wide range of temperature. For the reason that particularly good ozone resistance is achieved, the amount of the normal alkane in 100% by mass of the paraffin wax is preferably not less than 70% by mass, more preferably not less than 80% by mass, and further preferably not less than 85% by mass.

As for the paraffin wax, a single type of wax may be used solely, or two or more types of wax including another type of wax having a different carbon atom number distribution or normal proportion (the proportion of the normal alkane in the entire alkane) may be used in combination.

As the paraffin wax, for example, products of Ouchi Shinko Chemical Industrial Co., Ltd., NIPPON SEIRO CO., LTD., Seiko Chemical, Co., Ltd., etc., can be used.

In the case of containing a paraffin wax, the amount of the paraffin wax per 100 parts by mass of the rubber component is preferably not less than 0.5 parts by mass, more preferably not less than 1 part by mass, and further preferably not less than 2 parts by mass, and is preferably not greater than 8 parts by mass, more preferably not greater than 6 parts by mass, and further preferably not greater than 4 parts by mass. When the amount is in the above range, the advantageous effects of the present invention tend to be more favorably achieved.

In the case of containing a paraffin wax, the amount of a normal alkane in the paraffin wax per 100 parts by mass of the rubber component is preferably not less than 0.3 parts by mass, more preferably not less than 0.8 parts by mass, and further preferably not less than 1.2 parts by mass, and is preferably not greater than 5 parts by mass, more preferably not greater than 3 parts by mass, and further preferably not greater than 2 parts by mass. When the amount is in the above range, the advantageous effects of the present invention tend to be more favorably achieved.

The content ratio (normal alkane/surfactant) of the normal alkane in the paraffin wax to the surfactant, on a mass basis, is preferably not less than 0.3, more preferably not less than 0.5, and further preferably not less than 0.6, and is preferably not greater than 3, more preferably not greater than 2, and further preferably not greater than 1.5. When the content ratio is in the above range, a uniform and flexible coating can be formed on the surface of a tire tread, so that particularly good ozone resistance is achieved.

<Resin>

The rubber composition may contain a resin.

Examples of the resin include aromatic vinyl polymers, coumarone-indene resins, indene resins, rosin resins, terpene-based resins, and acrylic resins. These resins may be used individually, or two or more of these resins may be used in combination.

Aromatic vinyl polymers are resins obtained by polymerizing $\alpha$-methylstyrene and/or styrene, and examples thereof include styrene homopolymers, $\alpha$-methylstyrene homopolymers, and copolymers of $\alpha$-methylstyrene and styrene. Among them, copolymers of $\alpha$-methylstyrene and styrene are preferable, for the reason that the advantageous effects of the present invention are more favorably achieved.

Coumarone-indene resins are resins each containing coumarone and indene as main monomer components that form the skeleton (main chain) of the resin, and examples of the monomer components contained in the skeleton other than coumarone and indene include styrene, $\alpha$-methylstyrene, methylindene, and vinyltoluene.

Indene resins are resins each containing indene as a main monomer component that forms the skeleton (main chain) of the resin.

Rosin resins are resins typified by natural rosin, polymerized rosin, modified rosin, ester compounds of these rosins, or hydrogenated products of these rosins.

As the terpene-based resin, a polyterpene resin obtained by polymerizing a terpene compound, an aromatic modified terpene resin obtained by polymerizing a terpene compound with an aromatic compound, etc., can be used. In addition, hydrogenated products of these resins can be also used.

Polyterpene resins are resins obtained by polymerizing terpene compounds. The terpene compounds are hydrocarbons represented by a composition of $(C_5H_8)_n$ and oxygenated derivatives thereof, and are compounds having, as a basic backbone, a terpene classified into monoterpene ($C_{10}H_{16}$), sesquiterpene ($C_{15}H_{24}$), diterpene ($C_{20}H_{32}$), and the like, and examples of the terpene compounds include $\alpha$-pinene, $\beta$-pinene, dipentene, limonene, myrcene, allo-ocimene, ocimene, $\alpha$-phellandrene, $\alpha$-terpinene, $\gamma$-terpinene, terpinolene, 1,8-cineole, 1,4-cineole, $\alpha$-terpineol, $\beta$-terpineol, and $\gamma$-terpineol.

Examples of polyterpene resins include pinene resins, limonene resins, dipentene resins, and pinene-limonene resins, which are formed from the above-described terpene compounds. Among them, pinene resins are preferable, since copolymerization reaction is easy and since natural pine resin is a material and thus the cost is low. In general, a pinene resin contains both $\alpha$-pinene and $\beta$-pinene, which are isomeric with each other. Depending on contained components, pinene resins are classified into $\beta$-pinene resins containing $\beta$-pinene as a main component, and $\alpha$-pinene resins containing $\alpha$-pinene as a main component.

Examples of aromatic modified terpene resins include terpene phenol resins formed from terpene compounds and phenol compounds, and terpene styrene resins formed from terpene compounds and styrene compounds. In addition, terpene phenol styrene resins formed from terpene compounds, phenol compounds, and styrene compounds can be also used. Examples of phenol compounds include phenol, bisphenol A, cresol, and xylenol. Examples of styrene compounds include styrene and $\alpha$-methylstyrene.

As the acrylic resin, a styrene acrylic resin having a carboxyl group and obtained by copolymerizing an aromatic vinyl monomer component and an acrylic monomer component, etc., can be used.

Examples of the acrylic monomer component that forms the acrylic resin include (meth)acrylic acid, (meth)acrylic

acid esters (alkyl esters such as 2-ethylhexyl acrylate, aryl esters, aralkyl esters, etc.), (meth)acrylamide, and (meth)acrylic acid derivatives such as (meth)acrylamide derivatives. (Meth)acrylic acid is a generic term for acrylic acid and methacrylic acid.

Examples of the aromatic vinyl monomer component that forms the acrylic resin include aromatic vinyls such as styrene, $\alpha$-methylstyrene, vinyltoluene, vinylnaphthalene, divinylbenzene, trivinylbenzene, and divinylnaphthalene.

For the reason that the advantageous effects of the present invention are more favorably achieved, among the resins described above, aromatic vinyl polymers, coumarone-indene resins, and terpene-based resins are preferable.

From the viewpoint of compatibility with the rubber component, the SP value of the resin is preferably not greater than 11, more preferably not greater than 10, and further preferably not greater than 9.5, and is preferably not less than 6.5, more preferably not less than 7.5, and further preferably not less than 8.7.

From the viewpoint of compatibility with the rubber component, the softening point of the resin is preferably not lower than -10°C, more preferably not lower than 0°C, and further preferably not lower than 10°C, and is preferably not higher than 170°C, more preferably not higher than 150°C, and further preferably not higher than 130°C.

In the present specification, the softening point is a softening point that is measured with a ring and ball softening point measuring device according to JIS K6220: 2001 and that is a temperature at which a ball has descended.

From the viewpoint of compatibility with the rubber component, the glass transition temperature (Tg) of the resin is preferably not lower than -30°C, and is preferably not higher than 100°C, more preferably not higher than 80°C, and further preferably not higher than 70°C.

As the resin, for example, products of Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., TOAGOSEI CO., LTD., etc., can be used.

In the case of containing a resin, the amount of the resin per 100 parts by mass of the rubber component is preferably not less than 1 part by mass and more preferably not less than 4 parts by mass, and is preferably not greater than 10 parts by mass and more preferably not greater than 8 parts by mass. When the amount is in the above range, the advantageous effects of the present invention tend to be more favorably achieved.

<Carbon Black>

In the rubber composition, the amount of the carbon black per 100 parts by mass of the rubber component is not greater than 10 parts by mass.

Usable carbon black is not particularly limited, but examples thereof include N134, N110, N220, N234, N219, N339, N330, N326, N351, N550, and N762. These carbon blacks may be used individually, or two or more of these carbon blacks may be used in combination.

The nitrogen adsorption specific surface area ($N_2SA$) of the carbon black is preferably not less than 50 $m^2/g$ and more preferably not less than 100 $m^2/g$, and is preferably not greater than 200 $m^2/g$ and more preferably not greater than 150 $m^2/g$. When the $N_2SA$ is in the above range, the advantageous effects of the present invention are suitably achieved.

In the present specification, the $N_2SA$ of the carbon black is a value measured according to JIS K6217-2: 2001.

As the carbon black, for example, products of Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon Co., etc., can be used.

The amount of the carbon black per 100 parts by mass of the rubber component only needs to be not greater than 10 parts by mass, and is preferably not less than 3 parts by mass and more preferably not less than 5 parts by mass. When the amount is in the above range, the advantageous effects of the present invention are more favorably achieved.

<Silica>

The rubber composition contains silica.

The silica is not particularly limited, and, for example, dry-process silica (anhydrous silica), wet-process silica (hydrous silica), etc., can be used. Wet-process silica (hydrous silica) is preferable for the reason that it has a higher silanol group content.

The nitrogen adsorption specific surface area ($N_2SA$) of the silica is preferably not less than 70 $m^2/g$ and more preferably not less than 150 $m^2/g$, and is preferably not greater than 300 $m^2/g$ and more preferably not greater than 200 $m^2/g$. When the $N_2SA$ is in the above range, the advantageous effects of the present invention tend to be more favorably achieved.

The $N_2SA$ of the silica is a value measured by the BET method according to ASTM D3037-81.

As the silica, for example, products of Degussa, Rhodia, Tosoh Silica Corporation, Solvay Japan, Ltd., Tokuyama

Corporation, etc., can be used.

The amount of the silica per 100 parts by mass of the rubber component is not less than 30 parts by mass, preferably not less than 45 parts by mass, and further preferably not less than 60 parts by mass, and is preferably not greater than 200 parts by mass, more preferably not greater than 150 parts by mass, and further preferably not greater than 100 parts by mass. When the amount is in the above range, the advantageous effects of the present invention tend to be more favorably achieved.

<Silane Coupling Agent>

The silica is preferably used in combination with a silane coupling agent.

The silane coupling agent is not particularly limited, and examples thereof include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3 -trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These silane coupling agents may be used individually, or two or more of these silane coupling agents may be used in combination. Among them, mercapto silane coupling agents are preferable from the viewpoint that the advantageous effects of the present invention are more favorably achieved.

As the silane coupling agent, for example, products of Degussa, Momentive, Shin-Etsu Silicones, Tokyo Chemical Industry Co., Ltd., AZmax, Dow Corning Toray Co., Ltd., etc., can be used.

In the case of containing a silane coupling agent, the amount of the silane coupling agent per 100 parts by mass of the silica is preferably not less than 3 parts by mass, more preferably not less than 5 parts by mass, and further preferably not less than 8 parts by mass, and is preferably not greater than 20 parts by mass and more preferably not greater than 15 parts by mass. When the amount is in the above range, the advantageous effects of the present invention tend to be more favorably achieved.

<Oil>

The rubber composition may contain an oil.

Examples of the oil include process oils, vegetable fats and oils, and mixtures thereof. As the process oil, for example, paraffinic process oils, aromatic process oils, or naphthenic process oils can be used. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These oils may be used individually, or two or more of these oils may be used in combination. Among them, process oils are preferable, and aromatic process oils are more preferable, for the reason that the advantageous effects of the present invention are favorably achieved.

In the case of containing an oil, the amount of the oil per 100 parts by mass of the rubber component is preferably not less than 1 part by mass and more preferably not less than 2 parts by mass, and is preferably not greater than 9 parts by mass, more preferably not greater than 6 parts by mass, and more preferably not greater than 4 parts by mass. When the amount is in the above range, the advantageous effects of the present invention tend to be more favorably achieved.

<Stearic Acid>

The rubber composition may contain stearic acid.

As the stearic acid, a conventionally known one can be used, and, for example, products of NOF Corporation, Kao Corporation, Wako Pure Chemical Industries, Ltd., New Japan Chemical Co., Ltd., etc., can be used.

In the case of containing stearic acid, the amount of the stearic acid per 100 parts by mass of the rubber component is preferably not less than 0.5 parts by mass and more preferably not less than 1 part by mass, and is preferably not greater than 10 parts by mass and more preferably not greater than 5 parts by mass. When the amount is in the above range, the advantageous effects of the present invention tend to be more favorably achieved.

<Zinc Oxide>

The rubber composition may contain zinc oxide.

As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

In the case of containing zinc oxide, the amount of the zinc oxide per 100 parts by mass of the rubber component is preferably not less than 0.5 parts by mass and more preferably not less than 1 part by mass, and is preferably not greater than 10 parts by mass and more preferably not greater than 5 parts by mass. When the amount is in the above range, the advantageous effects of the present invention tend to be more favorably achieved.

<Sulfur>

The rubber composition may contain sulfur.

Examples of the sulfur include powdery sulfur, precipitated sulfur, colloidal sulfur, insoluble sulfur, highly dispersible sulfur, and soluble sulfur, which are generally used in the rubber industry. These sulfurs may be used individually, or two or more of these sulfurs may be used in combination.

As the sulfur, for example, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used.

In the case of containing sulfur, the amount of the sulfur per 100 parts by mass of the rubber component is preferably not less than 0.1 parts by mass and more preferably not less than 0.5 parts by mass, and is preferably not greater than 10 parts by mass, more preferably not greater than 5 parts by mass, and further preferably not greater than 3 parts by mass. When the amount is in the above range, the advantageous effects of the present invention tend to be more favorably achieved.

<Vulcanization Accelerator>

The rubber composition may contain a vulcanization accelerator.

Examples of the vulcanization accelerator include: thiazole vulcanization accelerators such as 2-mercaptobenzothiazole, di-2-benzothiazolyl disulfide, and N-cyclohexyl-2-benzothiazyl sulfenamide; thiuram vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These vulcanization accelerators may be used individually, or two or more of these vulcanization accelerators may be used in combination. Among them, sulfenamide vulcanization accelerators and guanidine vulcanization accelerators are preferable, for the reason that the advantageous effects of the present invention are more favorably achieved.

In the case of containing a vulcanization accelerator, the amount of the vulcanization accelerator per 100 parts by mass of the rubber component is preferably not less than 1 part by mass and more preferably not less than 2 parts by mass, and is preferably not greater than 10 parts by mass and more preferably not greater than 7 parts by mass. When the amount is in the above range, the advantageous effects of the present invention tend to be more favorably achieved.

In addition to the above-described components, the rubber composition may further contain additives that are generally used in the tire industry, for example, an organic peroxide; a filler such as calcium carbonate, talc, alumina, clay, aluminum hydroxide, and mica; and the like. Each of the amounts of these additives per 100 parts by mass of the rubber component is preferably 0.1 to 200 parts by mass.

As a method for producing the rubber composition, a known method can be used. For example, the rubber composition can be produced by a method in which the above respective components are kneaded using a rubber kneading device such as an open roll, a Banbury mixer, and a kneader, and then vulcanization is performed.

As for the kneading conditions, in a base kneading step of kneading the additives other than a vulcanizing agent and the vulcanization accelerator, the kneading temperature is normally 100 to 180°C and preferably 120 to 170°C. In a finish kneading step of kneading the vulcanizing agent and the vulcanization accelerator, the kneading temperature is normally not higher than 120°C and preferably 85 to 110°C. In addition, a composition obtained by kneading the vulcanizing agent and the vulcanization accelerator is normally subjected to vulcanization processing such as press vulcanization. The vulcanization temperature is normally 140 to 190°C and preferably 150 to 185°C.

The rubber composition can be used for tire outer layer members such as treads, sidewalls, clinches, and

wings, and is particularly suitable for treads (cap treads) and sidewalls.

<Pneumatic Tire>

The pneumatic tire of the present invention is produced by a normal method using the above rubber composition.
Specifically, an unvulcanized tire is formed by extruding a rubber composition obtained by blending the above components, in an unvulcanized state so as to correspond to the shape of a tread or the like, and forming the extruded rubber composition together with other tire members on a tire forming machine by a general method. A tire is obtained by heating and pressurizing the unvulcanized tire in a vulcanizing machine.
The pneumatic tire is usable as tires for passenger cars, tires for large passenger cars, tires for large SUVs, heavy-duty tires for trucks and buses, tires for light trucks, tires for motorcycles, etc.

EXAMPLES

The present invention will be specifically described by means of examples, but the present invention is not limited to these examples.
Various chemicals used in examples and comparative examples are collectively described below.

NR>

TSR

<BR1>

CB25 (a BR synthesized by using an Nd catalyst (Nd-BR), cis content: 97% by mass, vinyl content: 0.7% by mass, Mw/Mn: 1.78, Mw: 500 thousand, Mn: 280 thousand) manufactured by LANXESS

<BR2>

BR150B (a BR synthesized by using a Co catalyst (Co-BR), cis cotent: 96% by mass, vinyl content: 2.1% by mass, Mw/Mn: 2.30, Mw: 440 thousand, Mn: 190 thousand) manufactured by Ube Industries, Ltd.

<Modified BR1 for Silica>

End-modified BR (cis 38% by mass, vinyl content: 13% by mass, modifier: in formula (1), $R^1$, $R^2$, and $R^3$ = $-OCH_3$, $R^4$ and $R^5$ = $-CH_3$, "n" = 3) produced in Production Example 1

<Modified BR2 for Silica>

End-modified BR (cis content: 37% by mass, vinyl content: 15% by mass, modifier: in formula (1), $R^1$, $R^2$, and $R^3$ = $-OCH_3$, $R^4$ and $R^5$ = $-CH_2CH_3$, "n" = 3) manufactured by Sumitomo Chemical Co., Ltd.

<Modified BR for CB>

BR1250H (a tin-modified BR in which an end is modified with a tin atom, vinyl content: 10% by mass, cis content: 40% by mass, trans content: 50% by mass, Mw/Mn: 1.40, Mw: 460 thousand, Mn: 330 thousand, tin atom content: 250 ppm) manufactured by Zeon Corporation

<Modified SBR1 for Silica>

End-modified SBR (bound styrene content: 27% by mass, modifier: in formula (1), $R^1$, $R^2$, and $R^3$ = $-OCH_3$, $R^4$ and $R^5$ = $-CH_3$, "n" = 3) produced in Production Example 2

<Modified SBR2 for Silica>

End-modified SBR (bound styrene content: 37% by mass, modifier: in formula (1), $R^1$, $R^2$, and $R^3$ = $-OCH_3$, $R^4$ and $R^5$ = $-CH_3$, "n" = 3) produced in Production Example 3

<Carbon Black N220>

Show Black N220 ($N_2SA$: 114 $m^2/g$) manufactured by Cabot Japan K.K.

<Silica>

Ultrasil VN3 ($N_2SA$: 175 $m^2/g$) manufactured by Evonik Degussa GmbH

<Silane Coupling Agent>

Si75 (bis(3-triethoxysilylpropyl)disulfide) manufactured by Evonik Degussa GmbH

<Resin 1>

Sylvatraxx 4401 (a α-methylstyrene-based resin (a copolymer of α-methylstyrene and styrene), SP value: 8.81, softening point: 85°C, Tg: 43°C) manufactured by Arizona Chemical Company

<Resin 2>

YS Resin TO125 (an aromatic modified terpene resin, SP value: 8.73, softening point: 125°C, Tg: 64°C) manufactured by Yasuhara Chemical Co., Ltd.

<Resin 3>

NOVARES C10 (a coumarone-indene resin, SP value: 8.8, softening point: 10°C, Tg: -30°C) manufactured by Rutgers Chemicals

<Surfactant 1>

WB16 (a mixture of fatty acid calcium and fatty acid amide (corresponding to the fatty acid amide (B)), HLB value: 8.3, SP value: 10.0) manufactured by Struktol Company of America

<Surfactant 2>

Oleic acid amide (corresponding to the fatty acid amide (B), HLB value: 6.3, SP value: 10.2) manufactured by NOF Corporation

<Surfactant 3>

NEWPOL PE-64 (Pluronic nonionic surfactant (PEG/PPG-25/30 copolymer, corresponding to the compound represented by formula (I)), in formula (I), "a" + "c": 25, b: 30, HLB value: 10.9, SP value: 9.2) manufactured by Sanyo Chemical Industries, Ltd.

<Surfactant 4>

NEWPOL 50HB-100 (polyoxyethylene polyoxypropylene butyl ether (corresponding to the polyether (A)), EO average addition mole number: 5, PO average addition mole number: 5, ethylene oxide content: 43.2%, content of consecutive ethylene oxide units: 66.7%, HLB value: 11.2, SP value: 9.5) manufactured by Sanyo Chemical Industries, Ltd.

<Surfactant 5>

Lauric acid amide ethylamino ethanol (a compound represented by the following formula (corresponding to the compound represented by formula (IV)), HLB value: 8.5, SP value: 10.5) manufactured by Sanyo Chemical Industries, Ltd.

[Chem. 6] $RCONHCH_2CH_2NHCH_2CH_2OH$ $R=C_{11}H_{23}$

<Surfactant 6>

AMINON C-11S (palm oil fatty acid methyl ethanol amide (corresponding to the fatty acid amide (B)), Mw: about 260, HLB value: 10.0, SP value: 10.8) manufactured by Kao Corporation

<Polyethylene Glycol>

PEG 4000 (HLB value: 19.5, SP value: 9.6) manufactured by NOF Corporation

<Paraffin Wax>

Ozoace 0355 (melting point: 70°C, normal alkane content: 85% by mass) manufactured by NIPPON SEIRO CO., LTD.

<Stearic Acid>

Stearic acid "Tsubaki" (HLB value: 4.2, SP value: 9.1) manufactured by NOF Corporation

<Processing Aid>

EF44 (fatty acid zinc) manufactured by Struktol Company of America

<Oil>

Diana Process AH-24 (aromatic process oil) manufactured by Idemitsu Kosan Co., Ltd.

<Antioxidant 6PPD>

ANTIGENE 6C (N-(1,3-dimethylbutyl)-N'-phenyl-p-phenylenediamine) manufactured by Sumitomo Chemical Co., Ltd.

<Antioxidant TMQ>

Nocrac 224 (2,2,4-trimethyl-1,2-dihydroquinoline polymer) manufactured by Ouchi Shinko Chemical Industrial Co., Ltd.

<Zinc Oxide>

Two types of zinc oxide manufactured by Mitsui Mining & Smelting Co., Ltd.

<5% oil-containing powdery sulfur>

HK-200-5 manufactured by Hosoi Chemical Industry Co., Ltd.

<Vulcanization Accelerator TBBS>

Nocceler CZ (N-cyclohexyl-2-benzothiazolyl sulfenamide) manufactured by Ouchi Shinko Chemical Industrial Co., Ltd.

<Vulcanization Accelerator DPG>

Nocceler D (diphenylguanidine) manufactured by Ouchi Shinko Chemical Industrial Co., Ltd.

The "ethylene oxide content" and the "content of consecutive ethylene oxide units" of the surfactant 4 are calculated by the following equations.

$$\text{Ethylene oxide content (\%)} = \text{total ethylene oxide mass/polyether mass} \times 100\ (\%)$$

$$\text{Content of consecutive ethylene oxide units (\%)} = (\text{average mass of two or more consecutive ethylene oxide units})/(\text{total mass of ethylene oxide}) \times 100\ (\%)$$

<Production of End Modifier>

20.8 g of 3-(N,N-dimethylamino)propyltrimethoxysilane (manufactured by AZmax) was put into a 250-ml measuring flask in a nitrogen atmosphere, and hexanoic anhydride (manufactured by KANTO CHEMICAL CO., INC.) was added thereto such that the total volume was 250 ml, to produce an end modifier.

<Production Example 1>

18 L of cyclohexane (manufactured by KANTO CHEMICAL CO., INC.), 2000 g of butadiene (manufactured by TAKACHIHO TRADING CO., LTD.), and 53 mmol of diethyl ether (manufactured by KANTO CHEMICAL CO., INC.) were added in a 30-L pressure resistant vessel sufficiently purged with nitrogen, and the temperature of the mixture was increased to 60°C. Next, 16.6 mL of butyllithium (manufactured by KANTO CHEMICAL CO., INC.) was added to the mixture, and the mixture was stirred for 3 hours. Next, 12 ml of a 0.4 mol/L silicon tetrachloride/hexane aqueous solution was added to the mixture, and the mixture was stirred for 30 minutes. Next, 13 mL of the above end modifier was added to the mixture, and the mixture was stirred for 30 minutes. 2 mL of methanol (manufactured by KANTO CHEMICAL CO., INC.) in which 0.2 g of 2,6-tert-butyl-p-cresol (manufactured by Ouchi Shinko Chemical Industrial Co., Ltd.) had been dissolved was added to the reaction solution, and then the reaction solution was put into a stainless-steel vessel containing 18 L of methanol to collect aggregates. The obtained aggregates were dried under reduced pressure for 24 hours to obtain a modified BR (modified BR1 for silica). The Mw was 420,000, and the vinyl content was 13% by mass.

<Production Example 2>

18L of n-hexane, 540 g of styrene (manufactured by KANTO CHEMICAL CO., INC.), 1460 g of butadiene, and 17 mmol of tetramethylethylenediamine were added in a 30L pressure resistant vessel sufficiently purged with nitrogen, and the temperature of the mixture was increased to 40°C. Next, 3.5 ml of a 0.4 mol/L silicon tetrachloride/hexane aqueous solution was added to the mixture, and the mixture was stirred for 30 minutes. Next, 10.5 mL of butyllithium was added to the mixture, then the temperature of the mixture was increased to 50°C, and the mixture was stirred for 3 hours. Next, 30 mL of the above end modifier was added to the mixture, and the mixture was stirred for 30 minutes. 2 mL of methanol (manufactured by KANTO CHEMICAL CO., INC.) in which 0.2 g of 2,6-tert-butyl-p-cresol (manufactured by Ouchi Shinko Chemical Industrial Co., Ltd.) had been dissolved was added to the reaction solution, and then the reaction solution was put into a stainless-steel vessel containing 18 L of methanol to collect aggregates. The obtained aggregates were dried under reduced pressure for 24 hours to obtain a modified SBR (modified SBR1 for silica). The bound styrene content was 27% by mass. The Mw was 400,000, and the vinyl content was 53 mol%.

<Production Example 3>

18L of n-hexane, 740 g of styrene (manufactured by KANTO CHEMICAL CO., INC.), 1260 g of butadiene, and 17 mmol of tetramethylethylenediamine were added in a 30L pressure resistant vessel sufficiently purged with nitrogen, and the temperature of the mixture was increased to 40°C. Next, 3.5 ml of a 0.4 mol/L silicon tetrachloride/hexane aqueous solution was added to the mixture, and the mixture was stirred for 30 minutes. Next, 10.5 mL of butyllithium was added to the mixture, then the temperature of the mixture was increased to 50°C, and the mixture was stirred for 3 hours. Next, 30 mL of the above end modifier was added to the mixture, and the mixture was stirred for 30 minutes. 2 mL of methanol (manufactured by KANTO CHEMICAL CO., INC.) in which 0.2 g of 2,6-tert-butyl-p-cresol (manufactured by Ouchi Shinko Chemical Industrial Co., Ltd.) had been dissolved was added to the reaction solution, and then the reaction solution was put into a stainless-steel vessel containing 18 L of methanol to collect aggregates. The obtained aggregates were dried under reduced pressure for 24 hours to obtain a modified SBR (modified SBR2 for silica). The bound styrene content was 37% by mass. The Mw was 410,000, and the vinyl content was 54 mol%.

<Examples and Comparative Examples>

In accordance with each of the blending formulas shown in Table 2, the chemicals other than the sulfur and the vulcanization accelerator were kneaded under a condition of 150°C for 5 minutes using a 1.7-L Banbury mixer manufactured by Kobe Steel, Ltd., to obtain a kneaded product. Next, the sulfur and the vulcanization accelerator were added to the obtained kneaded product, and the mixture was kneaded under a condition of 80°C for 5 minutes using an

open roll to obtain an unvulcanized rubber composition.

A vulcanized rubber composition was obtained by press-vulcanizing the obtained unvulcanized rubber composition under a condition of 170°C for 10 minutes.

The obtained unvulcanized rubber composition was formed into the shape of a cap tread and attached together with other tire members to produce an unvulcanized tire, and the unvulcanized tire was press-vulcanized under a condition of 170°C for 10 minutes, to obtain a test tire (size: 195/65R15).

The obtained vulcanized rubber compositions and test tires were evaluated as described below. The results are shown in Table 2

<Viscoelasticity Test>

The tanδ of each of the above vulcanized rubber compositions was measured with a viscoelasticity spectrometer VES, manufactured by Iwamoto Corporation, under the conditions of: a temperature of 50°C, a frequency of 10 Hz; an initial strain of 10%; and a dynamic strain of 2%. The tanδ is indicated as an index with the result of Comparative Example 1 being 100 (RR index). A higher index indicates that the rolling resistance is lower and the low fuel consumption performance is better. When the index was not less than 110, the result was determined as good.

<Ozone Resistance Test>

The above test tires were left in an oven at 80°C for 1 week to be thermally aged, and running was performed with the test tires on an off-road course for 10 km. Then, according to JIS K 6259 "Rubber, vulcanized or thermoplastic-Determination of ozone resistance", a test piece having a predetermined size was prepared by cutting the cap tread of each of the above test tires after running, and a dynamic ozone deterioration test was carried out. After the test was conducted under the conditions of: a reciprocation frequency of 0.5±0.025 Hz; an ozone concentration of 50±5 pphm; a test temperature of 40°C; and a tensile strain of 20±2% for 48 hours, a state of cracking (presence/absence of cracks, crack size) was observed, thereby evaluating ozone resistance. The result is indicated as an index with the result of Comparative Example 1 being 100 (ozone cracking index). A higher index indicates that the number of cracks is smaller and the crack size is smaller, and the ozone resistance (ozone cracking performance) is better. When the index was not less than 100, the result was determined as good.

[Table 2]

| Cap tread rubber composition | | Comparative Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Blending formula (parts by mass) | NR | | | | | | | | | | | | |
| | BR1 (CB25) | 25 | | 10 | 10 | 10 | 10 | 10 | 10 | 10 | 10 | 10 | 10 |
| | BR2 (BR150B) | | 25 | | | | | | | | | | |
| | Modified BR1 for silica | | | 15 | 15 | 15 | 15 | 15 | 15 | 15 | 15 | 15 | 15 |
| | Modified BR2 for silica | | | | | | | | | | | | |
| | Modified BR for CB | | | | | | | | | | | | |
| | Modified SBR1 for silica | 75 | 75 | 75 | 75 | 75 | 75 | 75 | 75 | 75 | 75 | 75 | 75 |
| | Modified SBR2 for silica | | | | | | | | | | | | |
| | Carbon black N220 | 5 | 5 | 5 | 5 | 5 | 5 | 5 | 5 | 5 | 5 | 5 | 5 |
| | Silica (VN3) | 60 | 60 | 60 | 60 | 60 | 60 | 60 | 60 | 60 | 70 | 60 | 60 |
| | Silane coupling agent (Si75) | 4.8 | 4.8 | 4.8 | 4.8 | 4.8 | 4.8 | 4.8 | 4.8 | 4.8 | 5.6 | 4.8 | 4.8 |
| | Resin 1 (Sylvatraxx 4401) | | | | | | | | | | | | |
| | Resin 2 (TO125) | | | | | | | | | | | | |
| | Resin 3 (C10) | | | | | | | | | | | | |
| | Surfactant 1 (WB16) | | | | | | | | | | | | |
| | Surfactant 2 (oleic acid amide) | | | | | | | | | | | | |
| | Surfactant 3 (PE-64) | | | | | | | | | | | | |
| | Surfactant 4 (50HB-100) | | | | | | | | | | | | |
| | Surfactant 5 (test product) | | | | | | | | | | | | |
| | Surfactant 6 (AMINON C-11S) | | | | | | | | | | | | |
| | Polyethylene glycol | | | | | | | | | | | 2 | |
| | Paraffin wax | 1.5 | 1.5 | 1.5 | 1.5 | 1.5 | 1.5 | 3 | 1.5 | 1.5 | 1.5 | 1.5 | 1.5 |
| | Stearic acid | 3 | 3 | 3 | 3 | 3 | 3 | 3 | 5 | 3 | 3 | 3 | 3 |
| | Processing aid (EF44) | | | | | | | | | | | | 2 |
| | Oil | 6 | 6 | 6 | 4.5 | 3.5 | 4.5 | 4.5 | 4 | 16 | 16 | 4 | 4 |
| | Antioxidant 6PPD | 2 | 2 | 2 | 3.5 | 4.5 | 2 | 2 | 2 | 2 | 2 | 2 | 2 |
| | Antioxidant TMQ | 0.5 | 0.5 | 0.5 | 0.5 | 0.5 | 2 | 0.5 | 0.5 | 0.5 | 0.5 | 0.5 | 0.5 |
| | Zinc oxide | 2 | 2 | 2 | 2 | 2 | 2 | 2 | 2 | 2 | 2 | 2 | 2 |
| | 5% oil-containing powdery sulfur | 1.20 | 1.20 | 1.20 | 1.20 | 1.20 | 1.20 | 1.20 | 1.20 | 1.80 | 1.20 | 1.20 | 1.20 |
| | Vulcanization accelerator TBBS | 1.8 | 1.8 | 1.8 | 1.8 | 1.8 | 1.8 | 1.8 | 1.8 | 1.8 | 1.8 | 1.8 | 1.8 |
| | Vulcanization accelerator DPG | 2.2 | 2.2 | 2.2 | 2.2 | 2.2 | 2.2 | 2.2 | 2.2 | 2.2 | 2.2 | 2.2 | 2.2 |
| Evaluation | Tanδ index | 100 | 96 | 115 | 108 | 99 | 110 | 110 | 108 | 107 | 100 | 108 | 109 |
| | Ozone cracking index | 100 | 97 | 70 | 90 | 100 | 70 | 60 | 80 | 85 | 85 | 75 | 70 |

[Table 2] Cont. (* Reference Example)

| Cap tread rubber composition | | Example 1 | 2 | 3 | 4 | 5 | 6 | 7 | 8 | 9 | 10 | 11 | 12 | 13 | 14 | 15* | 16 | 17 | 18 | 19 |
|---|---|---|---|---|---|---|---|---|---|---|---|---|---|---|---|---|---|---|---|---|
| Blending formula (parts by mass) | NR | | | | | | | | | | | | | | | | | | | |
| | BR1 (CB25) | 10 | 10 | 10 | 10 | 10 | 10 | 10 | 10 | 10 | 10 | 10 | 10 | 10 | 10 | 10 | 10 | | 30 | |
| | BR2 (BR150B) | | | | | | | | | | | | | | | | | | | |
| | Modified BR1 for silica | 15 | 15 | 15 | 15 | 15 | 15 | 15 | 15 | 15 | 15 | 15 | 15 | 15 | | | 15 | 25 | 15 | 15 |
| | Modified BR2 for silica | | | | | | | | | | | | | | 15 | | | | | |
| | Modified BR for CB | | | | | | | | | | | | | | | 15 | | | | |
| | Modified SBR1 for silica | 75 | 75 | 75 | 75 | 75 | 75 | 75 | 75 | 75 | 75 | 75 | 75 | 75 | 75 | 75 | | 75 | 55 | 75 |
| | Modified SBR2 for silica | | | | | | | | | | | | | | | | 75 | | | |
| | Carbon black N220 | 5 | 5 | 5 | 5 | 5 | 5 | 5 | 5 | 5 | 5 | 5 | 5 | 5 | 5 | 15 | 5 | 5 | 5 | 5 |
| | Silica (VN3) | 60 | 60 | 60 | 60 | 60 | 60 | 60 | 60 | 60 | 60 | 60 | 60 | 60 | 60 | 45 | 60 | 60 | 60 | 60 |
| | Silane coupling agent (Si75) | 4.8 | 4.8 | 4.8 | 4.8 | 4.8 | 4.8 | 4.8 | 4.8 | 4.8 | 4.8 | 4.8 | 4.8 | 4.8 | 4.8 | 3.6 | 4.8 | 4.8 | 4.8 | 4.8 |
| | Resin 1 (Sylvatraxx 4401) | | | | | | | | | | | 4 | | | | | | | | |
| | Resin 2 (TO125) | | | | | | | | | | | | 4 | | | | | | 4 | |
| | Resin 3 (C10) | | | | | | | | | | | | | 4 | | | | | | |
| | Surfactant 1 (WB16) | 2 | | 4 | | | | | | | | 2 | 2 | 2 | | | | | | 2 |
| | Surfactant 2 (oleic acid amide) | | 2 | | 4 | | | | | | | | | | | | | | | |
| | Surfactant 3 (PE-64) | | | | | 2 | | 4 | | | | | | | 2 | 2 | 2 | 2 | 2 | |
| | Surfactant 4 (50HB-100) | | | | | | 2 | | 0.5 | | | | | | | | | | | |
| | Surfactant 5 (test product) | | | | | | | | | 2 | | | | | | | | | | |
| | Surfactant 6 (AMINON C-11S) | | | | | | | | | | 2 | | | | | | | | | |
| | Polyethylene glycol | | | | | | | | | | | | | | | | | | | |
| | Paraffin wax | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 3 | 3 | 3 | 3 | 3 | 3 | 3 | 3 | 3 | 3 | 3 | 3 | 3 | 3 | 3 | 3 | 3 | 3 | 3 |
| | Processing aid (EF44) | | | | | | | | | | | | | | | | | | | |
| | Oil | 4 | 4 | 4 | 4 | 4 | 4 | 4 | 4 | 4 | 4 | 4 | 4 | 4 | 4 | 4 | 4 | 4 | 4 | 4 |
| | Antioxidant 6PPD | 2 | 2 | 2 | 2 | 2 | 2 | 2 | 2 | 2 | 2 | 2 | 2 | 2 | 2 | 2 | 2 | 3.5 | 2 | 2 |
| | Antioxidant TMQ | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | Zinc oxide | 2 | 2 | 2 | 2 | 2 | 2 | 2 | 2 | 2 | 2 | 2 | 2 | 2 | 2 | 2 | 2 | 2 | 2 | 2 |
| | 5% oil-containing powdery sulfur | 1.20 | 1.20 | 1.20 | 1.20 | 1.20 | 1.20 | 1.20 | 1.20 | 1.20 | 1.20 | 1.20 | 1.20 | 1.20 | 1.20 | 1.20 | 1.20 | 1.20 | 1.20 | 1.20 |
| | Vulcanization accelerator TBBS | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator DPG | 2.2 | 2.2 | 2.2 | 2.2 | 2.2 | 2.2 | 2.2 | 2.2 | 2.2 | 2.2 | 2.2 | 2.2 | 2.2 | 2.2 | 2.2 | 2.2 | 2.2 | 2.2 | 2.2 |
| Evaluation | Tanδ index | 115 | 116 | 110 | 111 | 113 | 110 | 110 | 118 | 122 | 110 | 110 | 113 | 119 | 115 | 110 | 115 | 125 | 135 | 116 |
| | Ozone cracking index | 102 | 101 | 104 | 105 | 110 | 114 | 115 | 105 | 101 | 101 | 105 | 107 | 107 | 102 | 100 | 102 | 100 | 102 | 106 |

As seen from Table 2, Examples, which contain a BR containing a nitrogen atom and/or having a cis content of not greater than 60% by mass, a phenylenediamine antioxidant, and a surfactant having an HLB value of 5 to 12, in predetermined amounts and contain carbon black in an amount less than a predetermined amount, had both low fuel consumption performance and ozone resistance at favorable levels.

PEG 4000, which is polyethylene glycol, also has a hydrophilic group and a hydrophobic group and thus can be considered as one type of surfactant, but the HLB value thereof is out of the range of 5 to 20. Thus, even when PEG 4000 was blended, favorable ozone resistance was not achieved (Comparative Example 11).

Similarly, stearic acid can be also considered as one type of surfactant, but the HLB value thereof is out of the range of 5 to 20. Thus, even when the amount of stearic acid was increased, favorable ozone resistance was not achieved (Comparative Example 8). As shown in the other Comparative Examples, for example, also when the amount of the antioxidant was increased or when the amount of the wax was increased, the same result was obtained.

## Claims

**1.** A rubber composition for a tire outer layer, the rubber composition containing:

a rubber component containing a butadiene rubber;
silica;
a phenylenediamine antioxidant; and
a surfactant having an hydrophilic-lipophilic balance (HLB) value of 5 to 12, wherein
the butadiene rubber contains a nitrogen atom by being modified with a modifier having a nitrogen atom and has a cis content of not greater than 60% by mass,
an amount of the butadiene rubber in 100% by mass of the rubber component is 3 to 50% by mass, and
an amount of the phenylenediamine antioxidant is 1 to 10 parts by mass, an amount of the surfactant is 0.1 to 6 parts by mass, an amount of silica is not less than 30 parts by mass, and an amount of carbon black is not greater than 10 parts by mass, per 100 parts by mass of the rubber component.

**2.** The rubber composition for the tire outer layer according to claim 1, wherein the butadiene rubber is an end-modified butadiene rubber.

**3.** The rubber composition for the tire outer layer according to claim 1 or 2, wherein the solubility parameter (SP) value of the surfactant is 8 to 12.

**4.** The rubber composition for the tire outer layer according to any one of claims 1 to 3, wherein an amount of an oil per 100 parts by mass of the rubber component is not greater than 9 parts by mass.

**5.** A pneumatic tire having a tire outer layer member produced using the rubber composition according to any one of claims 1 to 4.

**6.** The pneumatic tire according to claim 5, wherein the tire outer layer member is selected from treads, sidewalls, clinches, and wings.

## Patentansprüche

**1.** Kautschukzusammensetzung für eine Reifenaußenschicht, wobei die Kautschukzusammensetzung enthält:

eine Kautschukkomponente, die einen Butadienkautschuk enthält;
Siliciumdioxid;
ein Phenylendiamin-Antioxidationsmittel; und
ein grenzflächenaktives Mittel mit einem Wert des hydrophilenlipophilen Gleichgewichts (HLB) von 5 bis 12, wobei
der Butadienkautschuk ein Stickstoffatom enthält, indem er mit einem Modifizierungsmittel mit einem Stickstoffatom modifiziert wurde, und einen cis-Gehalt von nicht mehr als 60 Massen-% aufweist,
eine Menge des Butadienkautschuks in 100 Massen-% der Kautschukkomponente 3 bis 50 Massen-% beträgt und
eine Menge des Phenylendiamin-Antioxidationsmittels 1 bis 10 Massenteile, eine Menge des grenzflächenaktiven Mittels 0,1 bis 6 Massenteile, eine Menge an Siliciumdioxid nicht weniger als 30 Massenteile und eine Menge an Carbon Black nicht mehr als 10 Massenteile pro 100 Massenteile der Kautschukkomponente beträgt.

**2.** Kautschukzusammensetzung für die Reifenaußenschicht nach Anspruch 1, wobei der Butadienkautschuk ein endmodifizierter Butadienkautschuk ist.

**3.** Kautschukzusammensetzung für die Reifenaußenschicht nach Anspruch 1 oder 2, wobei der Wert des Löslichkeitsparameters (SP) des grenzflächenaktiven Mittels 8 bis 12 beträgt.

**4.** Kautschukzusammensetzung für die Reifenaußenschicht nach einem der Ansprüche 1 bis 3, wobei die Menge eines Öls pro 100 Massenteile der Kautschukkomponente nicht mehr als 9 Massenteile beträgt.

**5.** Luftreifen mit einem Reifenaußenschichtelement, das unter Verwendung der Kautschukzusammensetzung nach einem der Ansprüche 1 bis 4 hergestellt wurde.

**6.** Luftreifen nach Anspruch 5, wobei das Reifenaußenschichtelement aus Laufflächen, Seitenwänden, Clinches und Flügeln ausgewählt ist.

## Revendications

**1.** Composition de caoutchouc pour une couche extérieure de pneu, la composition de caoutchouc contenant :

un composant caoutchouc contenant un caoutchouc de butadiène ;
de la silice ;
un antioxydant phénylènediamine ; et
un tensioactif ayant une valeur d'équilibre hydro-lipophile (HLB) de 5 à 12,
dans laquelle
le caoutchouc de butadiène contient un atome d'azote en étant modifié par un modificateur ayant un atome d'azote et a une teneur en cis non supérieure à 60 % en masse,
la quantité du caoutchouc de butadiène dans 100 % en masse du composant caoutchouc est de 3 à 50 % en masse, et
la quantité de l'antioxydant phénylènediamine est de 1 à 10 parties en masse, la quantité du tensioactif est de 0,1 à 6 parties en masse, la quantité de la silice n'est pas inférieure à 30 parties en masse, et la quantité du noir de carbone n'est pas supérieure à 10 parties en masse, pour 100 parties en masse du composant caoutchouc.

**2.** Composition de caoutchouc pour une couche extérieure de pneu selon la revendication 1, dans laquelle le caoutchouc de butadiène est un caoutchouc de butadiène à modification terminale.

**3.** Composition de caoutchouc pour une couche extérieure de pneu selon la revendication 1 ou 2, dans laquelle la valeur de paramètre de solubilité (SP) du tensioactif est de 8 à 12.

**4.** Composition de caoutchouc pour une couche extérieure de pneu selon l'une quelconque des revendications 1 à 3, dans laquelle la quantité d'huile pour 100 parties en masse du composant caoutchouc n'est pas supérieure à 9 parties en masse.

**5.** Pneu ayant un élément de couche extérieure de pneu produit par utilisation de la composition de caoutchouc de l'une quelconque des revendications 1 à 4.

**6.** Pneu selon la revendication 5, dans lequel l'élément de couche extérieure de pneu est choisi parmi les bandes de roulement, les flancs, les coussins de jante, et les ailes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6018207 B
- US 2016368324 A1
- US 2016177072 A1
- US 2017260373 A1
- US 2017015812 A1
- EP 3216827 A1
- US 2013184387 A1
- US 2008097023 A1


### Non-patent literature cited in the description


- Kaimenkasseizai Nyumon (Introduction to Surfactants). Sanyo Chemical Industries, Ltd, 2007, 212
- Table of Solubility Parameters. **K. L. HOY.** Solvent and Coatings Materials Research and Development Department. Union Carbites Corp, 1985